# FASCICULE DE BREVET EUROPEEN

(11) **EP 0 536 008 B1**
(45) Date de publication et mention de la délivrance du brevet: **27.09.1995**
(21) Numéro de dépôt: 92402169.4
(22) Date de dépôt: 28.07.1992
(51) Int. Cl.: F16D 66/02

(54) **Organe de friction muni d'un dispositif indicateur d'usure et frein à disque équipé d'un tel organe**
Reibbelag versehen mit einer Verschleiss-Anzeigevorrichtung und mit einem solchen Element ausgestattete Scheibenbremse
Brake lining provided with a wear indicator device and disc brake equipped with such an element

(30) Priorité: 30.09.1991 FR 9111983
(43) Date de publication de la demande: 07.04.1993
(73) Titulaire: ALLIEDSIGNAL EUROPE SERVICES TECHNIQUES, 93700 Drancy (FR)
(72) Inventeur: Le Deit, Gérard, F-77181 Courtry (FR); Gerard, Jean Louis, F-93170 Bagnolet (FR)
(74) Mandataire: Bentz, Jean-Paul

(56) Documents cités:
- DE-A- 2 832 443
- FR-A- 2 224 330
- FR-A- 2 317 560
- US-A- 3 190 397
- US-A- 4 085 824
- US-A- 4 498 559

## Description

La présente invention a pour objet un organe de friction comprenant une plaque support et un élément de friction disposé d'un côté de la plaque support, l'élément de friction étant prévu pour engager une face d'un organe tournant.

Un tel organe de friction est utilisé pour le freinage des véhicules automobiles à l'aide de freins à disque ou de freins à tambour. Un indicateur d'usure est habituellement associé à l'organe de friction pour signaler au conducteur que l'élément de friction a atteint une épaisseur telle que le remplacement de l'organe de friction s'impose. Les indicateurs électriques, habituellement utilisés pour allumer une lampe témoin au tableau de bord du véhicule, peuvent s'avérer incompatibles avec des systèmes d'antiblocage ou d'antipatinage des roues, de plus en plus utilisés. On utilise alors des indicateurs d'usure sonores.

On connaît différents types d'indicateurs qui génèrent un signal audible afin d'avertir le conducteur de l'usure excessive de l'élément de friction. Le plus souvent, ces indicateurs d'usure de l'art antérieur rendent nécessaires certaines modifications des freins existants lorsqu'ils doivent être intégrés à l'intérieur de l'ensemble de freinage. Ces modifications peuvent concerner l'élément de friction en lui-même comme dans US-A-3 190 397, mais aussi l'organe tournant du frein qui est prévu pour être engagé par l'indicateur d'usure afin de générer le signal d'avertissement audible comme dans US-A-4 085 824, et parfois d'autres parties du frein telles que l'étrier ou la chape dans un frein à disque comme dans US-A-4 498 559. De plus, dans certains indicateurs d'usure de l'art antérieur, le montage de l'indicateur sur l'organe de friction empêche le remplacement de l'élément de friction lorsque l'indicateur d'usure est en place et inversement. Enfin, les indicateurs d'usure connus produisent souvent, lorsqu'ils entrent en fonctionnement, un signal qui n'est audible qu'au voisinage du frein ainsi équipé, et qui est presque inaudible à l'intérieur de l'habitacle du véhicule.

On connaît du document FR-A-2 224 330 un organe de friction correspondant au préambule de la revendication principale, dans lequel l'indicateur d'usure est constitué d'une pièce façonnée, fixée à une saillie venue d'une pièce avec la plaque support et présentant des nez recourbés en forme de crochet suivant un angle différent et donnant un bruit d'alerte quand est atteint le taux d'usure prédéterminé de l'élément de friction pour lequel les nez frottent sur le disque.

Dans ce document, comme dans US-A-4 498 559, l'extrémité de l'indicateur d'usure vient en contact avec la face du disque de frein, à l'endroit de cette face où est formée la piste de frottement, qui est bien sûr polie. Il s'ensuit donc que le signal sonore ne sera donc, là encore, audible qu'au voisinage du frein ainsi équipé.

La présente invention propose un organe de friction associé à un indicateur d'usure de type audible qui peut être monté facilement sur un frein existant sans nécessiter de modifications lors de la construction de ce frein, l'indicateur d'usure ayant un fonctionnement fiable et émettant un signal sonore d'une intensité suffisante pour être entendu en toutes circonstances.

Dans ce but, l'invention propose un organe de friction comprenant une plaque support et un élément de friction disposé d'un côté de la plaque support, l'élément de friction étant prévu pour engager une face d'un organe tournant, et au moins un indicateur d'usure associé à la plaque support afin de générer un signal audible lorsque l'élément de friction possède, du fait de son usure, une épaisseur prédéterminée, l'indicateur d'usure étant formé d'un ressort comportant une partie intermédiaire de fixation de l'indicateur d'usure sur la plaque support du côté de celle-ci qui porte l'élément de friction, et une première partie d'extrémité d'émission du signal audible s'étendant dans un plan sensiblement perpendiculaire à celui de la plaque support et à celui d'une des faces de l'élément de friction qui ne vient pas engager l'organe tournant lors d'une action de freinage.

Selon l'invention, la première partie d'extrémité est sollicitée pour porter à la fois contre la face de la plaque support qui porte l'élément de friction et contre une des faces de l'élément de friction qui ne vient pas engager l'organe tournant lors d'une action de freinage, et le ressort comporte une seconde partie d'extrémité d'immobilisation en rotation de l'indicateur d'usure par rapport à la plaque support.

D'autres buts, caractéristiques et avantages ressortiront de la description qui suit de modes de réalisation de l'invention donnés à titre d'exemple non limitatif en référence aux dessins annexés sur lesquels :
- la Figure 1 est une vue en coupe d'un frein à disque équipé d'organes de friction associés à des indicateurs d'usure réalisés conformément aux enseignements de la présente invention,
- la Figure 2 est une vue en perspective d'un premier mode de réalisation d'un indicateur d'usure réalisé selon l'invention,
- la Figure 3 est une vue en bout, agrandie de l'indicateur d'usure de la Figure 2,
- la Figure 4 est une vue en perspective d'un second mode de réalisation d'un indicateur d'usure réalisé selon l'invention,
- la Figure 5 est une vue en perspective d'un troisième mode de réalisation d'un indicateur d'usure réalisé selon l'invention.

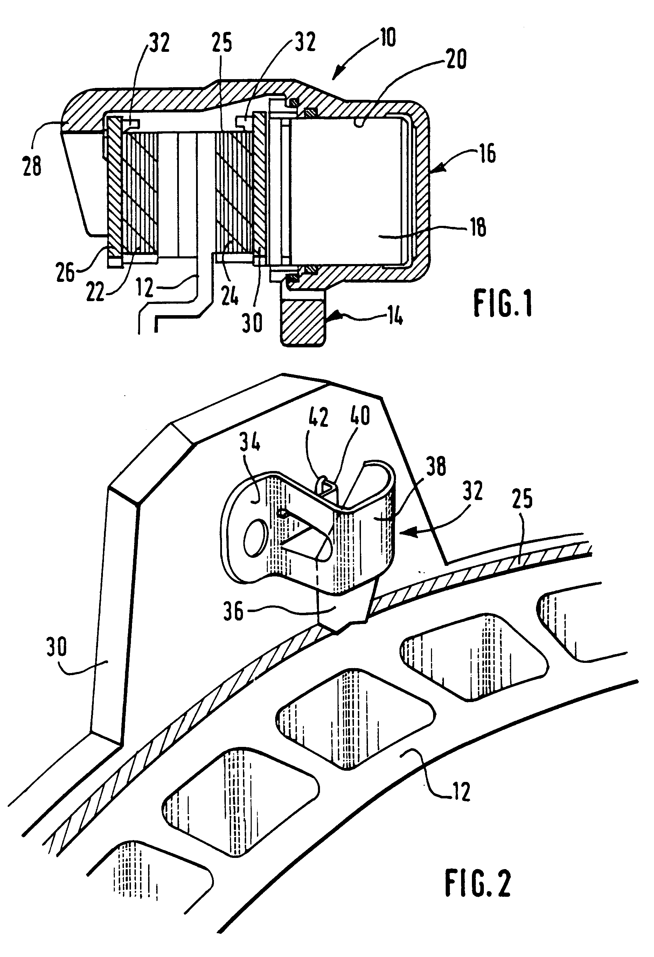

Un frein à disque 10, représenté de façon fragmentaire sur la Figure 1, comprend un disque ou rotor 12 associé de façon connue à un essieu (non représenté) et tournant avec ce dernier. Le boîtier d'essieu (non représenté) porte un organe support 14 sur lequel est monté coulissant un étrier 16, ce dernier comprenant un piston 18 monté coulissant dans un alésage 20 qui communique avec des moyens d'actionnement hydrauliques (non représentés). De façon connue, les moyens d'actionnement sont susceptibles de communiquer du fluide sous pression à l'intérieur de l'alésage 20 pour faire coulisser le piston 18 vers le disque 12.

Afin de ralentir la rotation du disque 12, deux éléments de friction 22 et 24 sont disposés en vis-à-vis des faces opposées du disque 12 et sont susceptibles d'engager ce dernier lors du déplacement du piston 18.

L'élément de friction 22, disposé axialement vers l'extérieur, est associé à une plaque support 26, elle-même coopérant par tout moyen convenable avec un bras de réaction 28 de l'étrier 16, tandis que l'élément de friction 24, disposé axialement vers l'intérieur, est associé à une plaque support 30. La plaque support 30 est montée coulissante sur l'organe support 14 de façon à pouvoir se déplacer axialement par rapport à ce dernier.

Selon l'invention, un indicateur d'usure 32 est associé à au moins une des plaques support 30 et 26, et de préférence aux deux plaques support, afin de générer un signal audible lorsque l'élément de friction 24,22 est usé et ne présente plus qu'une épaisseur prédéterminée. Cet indicateur d'usure, représenté plus en détail sur la Figure 2, est formé d'une lame de ressort fixée par sa partie intermédiaire 34 sur la plaque support 30. La fixation pourra être effectuée par tout moyen approprié, par exemple par rivetage, enclipsage, etc. La partie 34 est reliée à une première partie d'extrémité 36 par une zone intermédiaire 38 formant ressort en forme de U, et faisant porter la partie 36 contre la plaque support 30, sensiblement perpendiculairement à celle-ci.

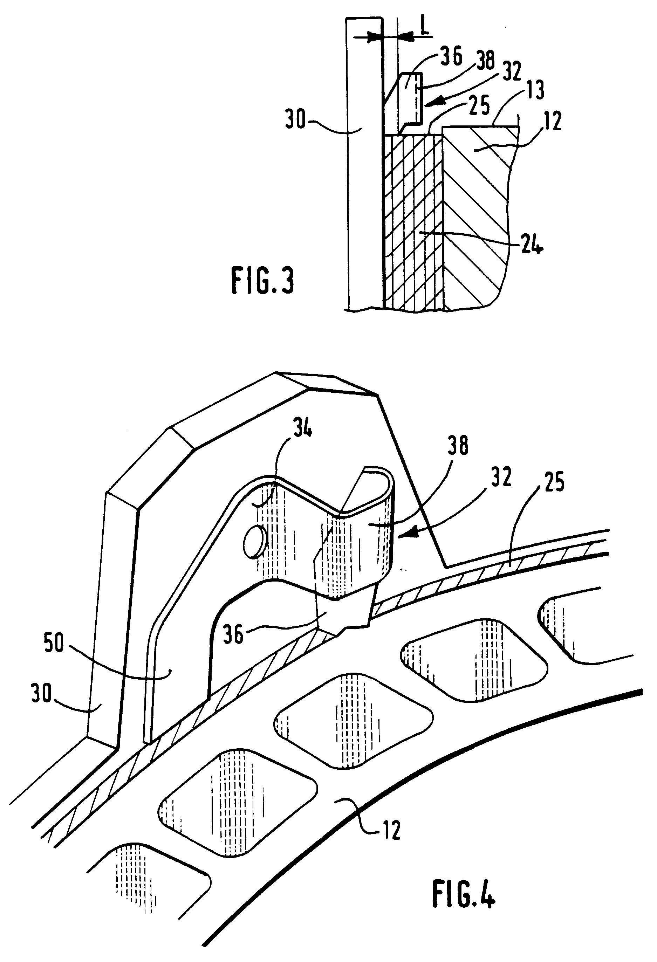

La partie intermédiaire 34 est d'autre part reliée à une seconde partie d'extrémité 40 pour immobiliser en rotation l'indicateur d'usure 32 par rapport à la plaque support 30. Dans l'exemple représenté sur la Figure 2, la seconde partie 40 est réalisée sous la forme d'un ergot coopérant avec une ouverture 42 pratiquée dans la plaque support 30. De la sorte, et grâce également à la zone intermédiaire 38 formant ressort, la première partie d'extrémité 36 porte sensiblement perpendiculairement sur la face supérieure 25 (en considérant la Figure 2) de l'élément de friction 24, ou plus exactement une des faces de l'élément de friction 24 qui ne vient pas engager le disque 12 lors d'une action de freinage. De façon encore plus précise, la première partie d'extrémité 36 porte sur la face 25 par sa tranche et sur une longueur L, comme on l'a représenté sur la Figure 3.

Grâce à la présente invention, on voit que la première partie d'extrémité 36 de l'indicateur d'usure 32, étant sollicitée pour porter à la fois contre la face de la plaque support 30 qui porte l'élément de friction 24, et contre la face 25 de cet élément de friction 24, sera au contact du disque 12 lorsque l'élément de friction 24 ne présentera plus que l'épaisseur L du fait de son usure, cette épaisseur L étant l'épaisseur prédéterminée pour laquelle on désire que l'émission d'un signal d'avertissement se produise. Lors d'une action de freinage, le disque 12, en venant frotter contre la partie 36, fera entrer celle-ci en vibration, d'où émission d'un signal sonore amplifié par la zone intermédiaire 38 de l'indicateur 32.

Un avantage important de l'invention réside dans le fait que, si le conducteur du véhicule ainsi équipé néglige de procéder au remplacement de l'organe de friction, l'élément de friction 24 continuant de s'user, la première partie d'extrémité 36 sera amenée à rester au contact du disque 12, provoquant ainsi l'émission d'un signal sonore même en dehors des périodes de freinage, et incitant ainsi d'avantage le conducteur du véhicule à remplacer les organes de friction.

Un autre avantage important de l'invention réside dans le fait que, comme on l'a vu, l'indicateur d'usure est en appui sur la face supérieure 25 de l'élément de friction 24. Il en résulte que, dès que cet élément de friction 24 ne présente plus que l'épaisseur L, la première partie d'extrémité 36 de l'indicateur 32 est amenée à coopérer avec la surface cylindrique 13 formant la périphérie du disque 12.

Cette surface périphérique 13, même si elle avait été usinée, s'est rapidement calaminée avec l'usage et est devenue relativement rugueuse. Il s'ensuit que la surface périphérique 13 induit dans la partie 36 de l'indicateur d'usure 32 des vibrations beaucoup plus importantes que si cette partie 36 venait frotter sur la piste de freinage du disque 12, c'est-à-dire sa face plane coopérant avec l'élément de friction 24, comme le font les indicateurs d'usure sonores connus.

Parallèlement, la première partie d'extrémité 36 de l'indicateur d'usure 32 étant en appui contre la plaque support 30, dès que cette partie 36 entre en vibration du fait du frottement sur le disque 12, elle frotte également par sa tranche contre la plaque support 30, ce qui procure une source supplémentaire de signal sonore.

On a représenté sur la Figure 4 un second mode de réalisation d'un indicateur d'usure. On voit sur cette Figure que la partie intermédiaire 34 de fixation de l'indicateur d'usure 32 sur la plaque support 30 et la première partie d'extrémité 36 d'émission du signal audible sont identiques à celles de la Figure 2. Par contre, la seconde partie d'extrémité d'immobilisation en rotation de l'indicateur d'usure 32 a été modifiée et comporte une patte plate 50 s'étendant contre la plaque support et venant prendre appui par sa tranche sur l'élément de friction 24. Comme dans le mode de réalisation précédent, l'élasticité de la zone intermédiaire 38 permet d'assurer que la première partie d'extrémité 36 est en appui sensiblement perpendiculairement à la fois sur la plaque support 30 et sur l'élément de friction 24 sur la longueur prédéterminée L.

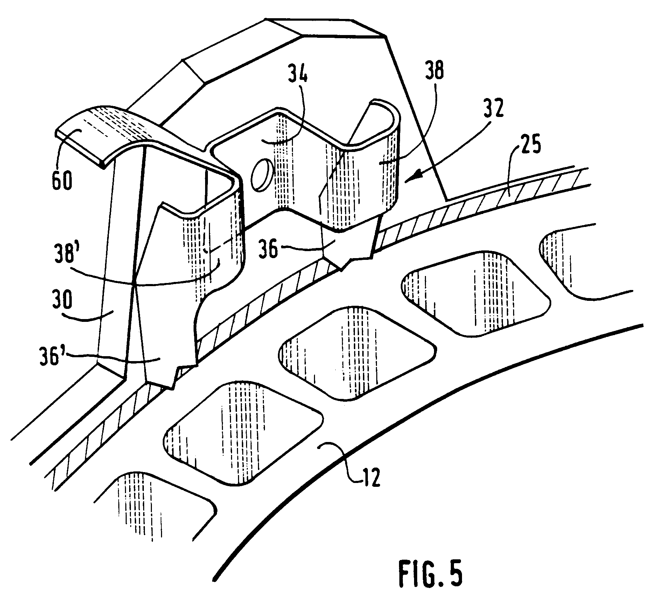

On a représenté sur la Figure 5 un troisième mode de réalisation d'un indicateur d'usure. On voit sur cette Figure que la partie intermédiaire 34 de fixation de l'indicateur d'usure 32 sur la plaque support 30 et la première partie d'extrémité 36 d'émission du signal audible sont identiques à celles de la Figure 2. Par contre, la seconde partie d'extrémité d'immobilisation en rotation de l'indicateur d'usure 32 a été modifiée et est réalisée d'une façon identique à celle de la première partie d'extrémité 36, symétriquement par rapport à la partie intermédiaire de fixation 34. Ainsi, la seconde partie d'extrémité 36′ porte elle aussi sensiblement perpendiculairement contre la face de la plaque support 30 qui porte l'élément de friction 24 et contre la face supérieure 25 (en considérant la Figure 5) de l'élément de friction 24, par sa tranche et sur la même longueur L. La seconde partie d'extrémité 36′ sert donc à la fois à l'immobilisation en rotation de l'indicateur d'usure et à l'émission du signal audible.

On comprend donc bien que, selon le mode de réalisation de la Figure 5, lorsque l'élément de friction 24 ne présentera plus que l'épaisseur L du fait de son usure, le disque 12 viendra au contact des parties d'extrémité 36 et 36′ et les fera entrer en vibration simultanément, avec pour conséquence l'émission de deux signaux sonores amplifiés par les zones intermédiaires 38 et 38′.

Ces zones 38 et 38′ ainsi que les parties d'extrémité 36 et 36′ pourront être déterminées pour que les signaux sonores émis aient la même fréquence ou des fréquences différentes.

Un avantage supplémentaire de l'invention est que, du fait de sa disposition, l'indicateur d'usure peut être associé au ressort habituellement utilisé pour maintenir l'organe de friction en place.

C'est ce qu'on a représenté sur la Figure 5 où l'on voit que la partie intermédiaire 34 est également reliée à une troisième partie d'extrémité 60, faisant ressort de maintien de l'organe de friction et venant prendre appui, lorsque l'organe de friction est en place dans le frein à disque 10 de la Figure 1, sous la voûte de l'étrier 16, de façon à solliciter en permanence l'organe de friction dans une direction préférentielle, par exemple vers l'axe du disque 12. Bien évidemment, cette troisième partie d'extrémité 60 peut être formée sur les indicateurs d'usure représentés aux Figures 2, 3 et 4.

## Revendications

1. Organe de friction comprenant une plaque support (26,30) et un élément de friction (22,24) disposé d'un côté de la plaque support (26,30), l'élément de friction (22,24) étant prévu pour engager une face d'un organe tournant (12), et au moins un indicateur d'usure (32) associé à la plaque support (26,30) afin de générer un signal audible lorsque l'élément de friction (22,24) possède du fait de son usure, une épaisseur (L) prédéterminée, l'indicateur d'usure (32) étant formé d'un ressort comportant une partie intermédiaire (34) de fixation de l'indicateur d'usure (32) sur la plaque support (26,30) du côté de celle-ci qui porte l'élément de friction (22,24) et une première partie d'extrémité (36) d'émission du signal audible s'étendant dans un plan sensiblement perpendiculaire à celui de la plaque support (26,30) et à celui d'une des faces (25) de l'élément de friction (22,24) qui ne vient pas engager l'organe tournant (12) lors d'une action de freinage, caractérisé en ce que la première partie d'extrémité (36) est sollicitée pour porter à la fois contre la face de la plaque support (26,30) qui porte l'élément de friction (22,24) et contre une des faces (25) de l'élément de friction (22,24) qui ne vient pas engager l'organe tournant (12) lors d'une action de freinage, et en ce que le ressort comporte une seconde partie d'extrémité (40,50,36') d'immobilisation en rotation de l'indicateur d'usure (32) par rapport à la plaque support (26,30).

2. Organe de friction selon la revendication 1, caractérisé en ce que la première partie d'extrémité (36) est sollicitée pour porter contre une des faces (25) de l'élément de friction (22,24) qui ne vient pas engager l'organe tournant (12) lors d'une action de freinage sur une longueur (L) correspondant à l'épaisseur prédéterminée.

3. Organe de friction selon l'une quelconque des revendications précédentes, caractérisé en ce que la seconde partie d'extrémité (40) d'immobilisation en rotation de l'indicateur d'usure (32) par rapport à la plaque support (26,30) est un ergot coopérant avec une ouverture (42), pratiquée dans la plaque support (26,30).

4. Organe de friction selon l'une quelconque des revendications 1 ou 2, caractérisé en ce que la seconde partie d'extrémité (50) d'immobilisation en rotation de l'indicateur d'usure (32) par rapport à la plaque support (26,30) comporte sur une patte plate (50) s'étendant contre la plaque support (26,30) et venant prendre appui par sa tranche sur l'élément de friction (22,24).

5. Organe de friction selon l'une quelconque des revendications 1 ou 2, caractérisé en ce que la seconde partie d'extrémité (36') d'immobilisation en rotation de l'indicateur d'usure (32) par rapport à la plaque support (26,30) est réalisé d'une façon identique à celle de la première partie d'extrémité (36), symétriquement par rapport à la partie intermédiaire de fixation (34).

6. Organe de friction selon l'une quelconque des revendications précédentes, caractérisé en ce que l'organe tournant est un disque (12), et en ce que l'indicateur d'usure (32) coopère avec la surface cylindrique (13) formant la périphérie du disque (12) pour générer le signal audible.

7. Organe de friction selon la revendication 6, caractérisé en ce que l'indicateur d'usure (32) comporte une troisième partie d'extrémité (60) faisant ressort de maintien de l'organe de friction.

8. Frein à disque, caractérisé en ce qu'il comporte au moins un organe de friction conforme à l'une des revendications précédentes.

## Claims

1. Friction member comprising a carrier plate (26, 30) and a friction pad (22, 24) arranged on one side of the carrier plate (26, 30), the friction pad (22, 24) being designed to engage one face of a rotating member (12), and at least one wear indicator (32) associated with the carrier plate (26, 30) so as to generate an audible signal when the friction pad (22, 24), on account of its wear, possesses a predetermined thickness (L), the wear indicator (32) being formed by a spring comprising an intermediate part (34) for fixing the wear indicator (32) onto the carrier plate (26, 30) on the side of the latter which bears the friction pad (22, 24), and a first end part (36) for emission of the audible signal extending in a plane substantially perpendicular to that of the carrier plate (26, 30) and to that of one of the faces (25) of the friction pad (22, 24) which does not come to engage the rotating member (12) during a braking action, characterized in that the first end part (36) is acted upon so as to bear both against the face of the carrier plate (26, 30) which bears the friction pad (22, 24) and against one of the faces (25) of the friction pad (22, 24) which does not come to engage the rotating member (12) during a braking action, and in that the spring comprises a second end part (40, 50, 36') for locking of the wear indicator (32) in terms of rotation with respect to the carrier plate (26, 30).

2. Friction member according to Claim 1, characterized in that the first end part (36) is acted upon so as to bear against one of the faces (25) of the friction pad (22, 24) which does not come to engage the rotating member (12) during a braking action over a length (L) corresponding to the predetermined thickness.

3. Friction member according to any one of the preceding claims, characterized in that the second end part (40) for locking the wear indicator (32) in terms of rotation with respect to the carrier plate (26, 30) is a lug interacting with an opening (42) made in the carrier plate (26, 30).

4. Friction member according to either one of Claims 1 and 2, characterized in that the second end part (50) for locking the wear indicator (32) in terms of rotation with respect to the carrier plate (26, 30) comprises on [sic] a flat catch (50) extending against the carrier plate (26, 30) and coming to bear by its edge against the friction pad (22, 24).

5. Friction member according to either one of Claims 1 and 2, characterized in that the second end part (36') for locking the wear indicator (32) in terms of rotation with respect to the carrier plate (26, 30) is constructed in a manner identical to that of the first end part (36), symmetrically with respect to the intermediate fixing part (34).

6. Friction member according to any one of the preceding claims, characterized in that the rotating member is a disk (12), and in that the wear indicator (32) interacts with the cylindrical surface (13) forming the periphery of the disk (12) in order to generate the audible signal.

7. Friction member according to Claim 6, characterized in that the wear indicator (32) comprises a third end part (60) forming a friction member retaining spring.

8. Disk-brake, characterized in that it comprises at least one friction member in accordance with one of the preceding claims.

## Patentansprüche

1. Reibbelag mit einer Trägerplatte (26, 30) und einem Reibungselement (22, 24), welches auf einer Seite der Trägerplatte (26, 30) angeordnet ist, wobei das Reibungselement (22, 24) dafür vorgesehen ist, an einer Seite eines sich drehenden Organs (12) anzugreifen, sowie wenigstens einer Verschleißanzeige (32), die mit der Trägerplatte (26, 30) in Verbindung steht, um ein hörbares Signal zu erzeugen, wenn das Reibungselement (22, 24) aufgrund seines Verschleißes eine vorbestimmte Dicke (L) aufweist, wobei die Verschleißanzeige (32) durch eine Feder gebildet ist, die einen Zwischenabschnitt (34) zur Befestigung der Verschleißanzeige (32) an der Trägerplatte (26, 30) auf der das Reibungselement (22, 24) tragenden Seite sowie einen ersten Endabschnitt (36) zur Abgabe des hörbaren Signals umfaßt, der sich in einer Ebene erstreckt, die im wesentlichen senkrecht zu derjenigen der Trägerplatte (26, 30) und derjenigen von einer der Seiten (25) des Reibungselementes (22, 24) ist, welche bei einer Bremsbetätigung nicht an dem sich drehenden Organ (12) angreift, dadurch gekennzeichnet, daß der erste Endabschnitt (36) derart beaufschlagt ist, daß er gleichzeitig an der das Reibungselement (22, 24) tragenden Trägerplatte (26, 30) und an einer der Seiten (25) des Reibungselementes (22, 24) anliegt, die bei einer Bremsbetätigung nicht an dem sich drehenden Organ (12) angreift, und daß die Feder einen zweiten Endabschnitt (40, 50, 36') aufweist, der die Verschleißanzeige (32) drehfest bezüglich der Trägerplatte (26, 30) hält.

2. Reibbelag nach Anspruch 1, dadurch gekennzeichnet, daß der erste Endabschnitt (36) derart beaufschlagt ist, daß er an einer der Seiten (25) des Reibelementes (22, 24), die bei einer Bremsbetätigung nicht an dem sich drehenden Organ (12) angreift, entlang einer der vorbestimmten Dicke entsprechenden Länge (L) anliegt.

3. Reibbelag nach einem der vorhergehenden Ansprüche, dadurch gekennzeichnet, daß der zweite Endabschnitt (40), der die Verschleißanzeige (32) drehfest bezüglich der Trägerplatte (26, 30) hält, ein Vorsprung ist, der mit einer in der Trägerplatte (26, 30) ausgebildeten Öffnung (42) zusammenwirkt.

4. Reibbelag nach einem der Ansprüche 1 und 2, dadurch gekennzeichnet, daß der zweite Endabschnitt (50), der die Verschleißanzeige (32) drehfest bezüglich der Trägerplatte (26, 30) hält, einen flachen Flansch (50) aufweist, der sich entlang der Trägerplatte (26, 30) erstreckt und sich mit seinem Rand an dem Reibungselement (22, 24) abstützt.

5. Reibbelag nach einem der Ansprüche 1 und 2, dadurch gekennzeichnet, daß der zweite Endabschnitt (36'), der die Verschleißanzeige (32) drehfest bezüglich der Trägerplatte (26, 30) hält, in gleicher Weise wie der erste Endabschnitt (36) und symmetrisch bezüglich des Zwischenabschnittes (34) zur Befestigung ausgebildet ist.

6. Reibbelag nach einem der vorhergehenden Ansprüche, dadurch gekennzeichnet, daß das sich drehende Organ eine Scheibe (12) ist und daß die Verschleißanzeige (32) mit der den Umfang der Scheibe (12) bildenden zylindrischen Fläche (13) zusammenwirkt, um das hörbare Signal zu erzeugen.

7. Reibbelag nach Anspruch 6, dadurch gekennzeichnet, daß die Verschleißanzeige (32) einen dritten Endabschnitt (60) umfaßt, der eine Haltefeder des Reibbelages bildet.

8. Scheibenbremse, dadurch gekennzeichnet, daß sie wenigstens einen Reibbelag gemäß einem der vorhergehenden Ansprüche enthält.
